# EUROPEAN PATENT APPLICATION

(11) **EP 3 725 831 A1**
(43) Date of publication of application: **21.10.2020**
(21) Application number: 18887504.1
(22) Date of filing: 26.11.2018
(51) Int. Cl.: C08J 9/36, B32B 5/18, B32B 27/40, B60K 37/00, B60R 13/02, C08G 18/00, C08G 101/00

(54) **POLYURETHANE FOAM FOR HIGH-FREQUENCY WELDING, LAMINATE, AND PRODUCTION METHOD THEREFOR**

(30) Priority: 12.12.2017 JP 2017238048
(71) Applicant: Bridgestone Corporation, Chuo-Ku Tokyo 104-8340 (JP)
(72) Inventor: YAMANAKA, Yusuke, Tokyo 104-8340 (JP)
(74) Representative: Oxley, Robin John George
(86) International application number: PCT/JP2018/043348
(87) International publication number: WO 2019/116864

(57) **Abstract**

Provided are: a polyurethane foam for high-frequency welding which, when laminated with a thermoplastic resin substrate by high-frequency welding even using a high-frequency welder having a low compression-bonding strength, gives a laminate having an improved bonding strength, a laminate produced by thermally welding the polyurethane foam for high-frequency welding and a thermoplastic resin, and a method for producing the laminate. In the polyurethane foam for high-frequency welding, at least a part of a portion to be bonded has a smaller compression load than the compression load of a portion not to be bonded therein.

## Description

### Technical Field

The present invention relates to a polyurethane foam for high-frequency welding, a laminate produced by welding the polyurethane foam and a thermoplastic resin, and a method for producing the laminate.

### Background Art

Heretofore, it is known to bond a polyurethane foam and a thermoplastic resin substrate by laminating a polyurethane foam for high-frequency welding onto a thermoplastic resin substrate followed by welding them at high frequencies.

For the purpose of providing a polyurethane foam for high-frequency welding which can be bonded by high-frequency welding in a shorter period of time and which can exhibit an excellent bonding strength and can maintain mechanical properties such as residual compression strain, PTL 1 describes a polyurethane foam which enables high-frequency welding and which is produced by reacting and foaming a starting material for a polyurethane foam that contains a polyol, a polyisocyanate, a catalyst, a foaming agent and an auxiliary foaming agent, wherein the foaming agent is water, the content thereof is 3.5 to 5.0 parts by mass relative to 100 parts by mass of the polyol, the auxiliary foaming agent is liquefied carbon dioxide and the content thereof is 2.3 to 6.0 parts by mass relative to 100 parts by mass of the polyol, and the starting material for the polyurethane foam contains a powder of a thermoplastic resin having a melting point of 60 to 170°C in an amount of 1 to 30 parts by mass relative to 100 parts by mass of the polyol, and the apparent density of the polyurethane foam is 12 to 25 kg/m³.

### Citation List

### Patent Literature

PTL 1: JP 2008-111045 A

### Summary of Invention

### Technical Problem

In bonding to a thermoplastic substrate using a polyurethane foam for high-frequency welding, it has been known that, depending on the compression strength of the high-frequency welding machine to be used in some cases, the bonding strength of the resultant laminate is not often sufficient.

An object of the present invention is to provide a polyurethane foam for high-frequency welding which, when laminated with a thermoplastic resin substrate by high-frequency welding even using a high-frequency welder having a low compression-bonding strength, gives a laminate having an improved bonding strength. Further, another object of the present invention is to provide a laminate produced by thermally welding the polyurethane foam for high-frequency welding and a thermoplastic resin, and a method for producing the laminate.

### Solution to Problem

As a result of assiduous studies, the present inventor has found that, when the compression load of a portion to be bonded of a polyurethane foam is made to be smaller than the compression load of a portion not to be bonded thereof, the above-mentioned problems can be solved.

Specifically, the present invention relates to the following <1> to <9>.
<1> A polyurethane foam for high-frequency welding, wherein at least a part of a portion to be bonded has a smaller compression load than the compression load of a portion not to be bonded therein.
<2> The polyurethane foam for high-frequency welding according to <1>, wherein the portion to be bonded has at least one selected from incisions and concaves.
<3> The polyurethane foam for high-frequency welding according to <1> or <2>, wherein the ratio of the compression load of the portion to be bonded to the compression load of the portion not to be bonded is 80% or less.
<4> The polyurethane foam for high-frequency welding according to <1> or <2>, wherein the ratio of the compression load of the portion to be bonded to the compression load of the portion not to be bonded is 65% or less.
<5> The polyurethane foam for high-frequency welding according to any of <1> to <4>, wherein the ratio of the tensile strength at break of the portion to be bonded to the tensile strength at break of the portion not to be bonded is 60% or more.
<6> The polyurethane foam for high-frequency welding according to any of <1> to <5>, wherein the portion to be bonded has concaves.
<7> A laminate produced by thermally welding a polyurethane foam for high-frequency welding of any of <1> to <6> and a thermoplastic resin.
<8> The laminate according to <7>, which is an interior and exterior material for automobiles.

### Advantageous Effects of Invention

According to the present invention, there can be provided a polyurethane foam for high-frequency welding, which, when laminated with a thermoplastic resin substrate by high-frequency welding even using a high-frequency welder having a low bonding strength, gives a laminate having an improved bonding strength. Further, according to the present invention, there can be provided a laminate produced by thermally welding the polyurethane foam for high-frequency welding and a thermoplastic resin, and a method for producing the laminate.

### Brief Description of Drawing

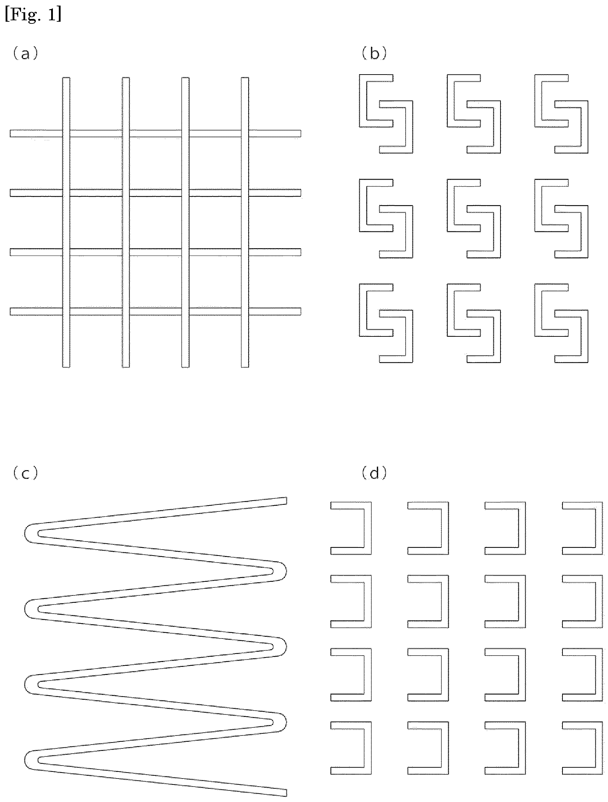

Fig. 1 is a plan view showing examples of a blanking die for use in forming concaves and incisions.

### Description of Embodiments

Hereinafter the present invention is illustrated and explained in detail with reference to embodiments thereof. In the following description, an expression of "A to B" indicating a numerical range means a numerical range that includes the end points A and B, and when A < B, the expression means "A or more and B or less", and when A > B, the expression means "A or less and B or more".

Part by mass and % by mass are the same as part by weight and % by weight, respectively.

### [Polyurethane foam for high-frequency welding]

The polyurethane foam for high-frequency welding of the present invention (hereinafter, this may be simply referred to as "polyurethane foam") is characterized in that at least a part of a portion to be bonded has a smaller compression load than the compression load of a portion not to be bonded therein. Specifically, the compression load of at least a part of a portion to be bonded is smaller than the compression load of a portion not to be bonded.

It has been known that, when the bonding strength of a high-frequency welder to be used is low, there occurs a problem that the bonding strength between the polyurethane foam for high-frequency welding and a substrate of a thermoplastic resin could not be sufficiently high. As a result of assiduous studies, the present inventor has found that, when the compression load of a portion to be bonded (a high-frequency welding portion) of a polyurethane foam for high-frequency welding is made to be smaller than the compression load of a portion not to be bonded thereof, then the bonding strength can be increased, and has completed the present invention.

The details of the mechanism of action to attain the above-mentioned advantageous effects are not clear but a part thereof may be considered to be as follows. Specifically, in high-frequency welding, a welding horn is pressed against a thermoplastic resin substrate from the side of a polyurethane foam, and high frequencies are generated from the welding horn to fuse mainly the thermoplastic resin substrate to thereby bond the polyurethane foam and the thermoplastic resin by an anchor effect. At that time, it is considered that, when the compression-bonding strength of the pressed welding horn is low, the thermoplastic resin substrate could not be sufficiently fused and, in addition, the polyurethane foam and the fused thermoplastic resin could not be bonded to secure a sufficient bonding strength. When the compression load of the bonding portion of the polyurethane foam is made to be smaller than the compression load of the portion not to be bonded thereof, then the polyurethane foam can well bond to the thermoplastic substrate even though the welding horn is pressed at a lower force and, as a result, the bonding strength can be presumed to increase.

In the following, the present invention is described in more detail.

### <Compression Load>

In the present invention, in the polyurethane foam for high-frequency welding, the compression load of at least a part of a portion to be bonded is smaller than the compression load of a portion not to be bonded therein.

A portion to be bonded is a portion to be bonded to a substrate of a thermoplastic resin by pressing a welding horn thereto in high-frequency welding, and a portion not to be bonded is a remaining portion except that portion to be bonded.

In the present invention, the compression load of at least a part of a portion to be bonded is smaller than the compression load of a portion not to be bonded, that is, the compression load of all the portion to be bonded needs not to be smaller than the compression load of the portion not to be bonded, and preferably, the part of a portion to be bonded and having a smaller compression load than the compression load of a portion not to be bonded is 50% or more of all the portion to be bonded, more preferably 70% or more.

The part of a portion to be bonded and having a smaller compression load than the compression load of a portion not to be bonded is 50% or more of all the portion to be bonded, which means that, when the number of portions to be bonded (the number of bonding portions) is 100, the compression load of 50 or more of those portions is smaller than the compression load of the portion not to be bonded.

In the present invention, the compression load means a compression load in compressing down to be 10 to 15% of the original thickness in no compression, 100%. Specifically, in the case where the thickness of the polyurethane foam for high-frequency welding is 15 mm, the compression load means a compression load in compressing the foam down to be 2 mm.

The compression load is measured by compressing a sample with a flat disc of 10 φ (circular plate having a diameter of 10 mm), using an Instron electromechanical universal tester.

In the present invention, the ratio of the compression load of a portion to be bonded to the compression load of a portion not to be bonded is preferably 80% or less, more preferably 70% or less, even more preferably 65% or less. The lower limit is not specifically defined but is, from the viewpoint of the strength of a portion to be bonded, preferably 20% or more, more preferably 30% or more, even more preferably 40% or more.

The ratio of the compression load of a portion to be bonded to the compression load of a portion not to be bonded is a compression load of the portion to be bonded as expressed by % relative to the compression load of the portion not to be bonded, 100%.

### <Tensile strength at break>

The portion to be boned is not specifically limited so far as being processed to have a smaller compression load than that of the portion not to be bonded, but on the other hand, when the tensile strength at break of the portion to be bonded lowers, the strength of the entire polyurethane foam lowers as a result, therefore providing a problem that the foam may readily be broken and the bonding strength thereof may lower.

Accordingly, the ratio of the tensile strength at break of the portion to be bonded to the tensile strength at break of the portion not to be bonded is preferably 20% or more, more preferably 35% or more, even more preferably 60% or more, further more preferably 70% or more, still further more preferably 90% or more. The upper limit is not specifically defined.

The ratio of the tensile strength at break of the portion to be bonded to the tensile strength at break of the portion not to be bonded is a tensile strength at break of the portion to be bonded as expressed by % relative to the tensile strength at break of the portion not to be bonded, 100%.

The tensile strength at break of the portion to be bonded is measured by arranging the portion to be bonded of a sample at the center part thereof and testing it at a test speed of 200 min/min.

### <Portion to be bonded>

In the present invention, the portion to be bonded of the polyurethane foam is treated in some way so that the compression strength thereof could be smaller than the compression strength of the portion not to be bonded thereof. In addition, the portion to be bonded is preferably such that the tensile strength at break thereof could fall within the above-mentioned range.

Specifically, it is preferable that the portion to be bonded of the polyurethane foam has at least one selected from incisions and concaves.

Fig. 1 is a plan view showing examples of a blanking die for use in forming concaves (Fig. 1(a)) and incisions (Fig. 1 (b) to (d)). Using such a blanking die, incisions or concaves having the same shape as that of the blanking die is formed on the surface of the polyurethane foam against.

### [Incisions]

By forming incisions in the polyurethane foam, the compression load can be reduced.

The shape of the blanking die for use for forming incisions in the portion to be bonded of the polyurethane foam of the present invention includes a form of a combination of letters "C" as in Fig. 1(b), a waveform as in Fig. 1(c), and a letter "C" as in Fig. 1 (d), and any of these may be appropriately selected for use herein. Using such a blanking die, incisions of the form of the blanking die (incisions to pass through the polyurethane foam) are formed in a part of the portion to be bonded of the polyurethane foam (a part against which a welding horn of a high-frequency welder is pressed up).

The form of incisions is not limited to these.

### [Concaves]

By providing concaves in the polyurethane foam, the compression load of the portion to be bonded where the concaves are provided can be reduced. For forming the concaves, specifically, a ruling line blade shown in Fig. 1(a) can be pressed against the polyurethane foam.

By partly breaking the foamed structure of the polyurethane foam, concaves are formed in the polyurethane. The foamed structure of the concaves is partly broken and therefore the compression load thereof is smaller than that of the portion not to be bonded.

In the case where the portion to be bonded has concaves, the high-frequency welding with a welding horn is, from the viewpoint of visibility of the portion to be bonded and from the viewpoint of bonding performance, preferably carried out from the surface having the concaves of the polyurethane foam.

The method of forming concaves is not limited to the above, and other examples of the method includes a method of removing a part in the thickness direction of the polyurethane to form a columnar or pillar-like concaves, and a method of providing concaves in a step of foaming to produce the polyurethane foam. Concaves may be provided on one surface of the polyurethane foam, but a case of providing concaves on both surfaces of the polyurethane foam in the portion to be bonded thereof is not excluded.

Among these, from the viewpoint of forming a portion to be bonded having a small compression load, preferably, the portion to be bonded has incisions formed using a blanking die having a waved form as in Fig. 1(c) or a combined form of "C" as in Fig 1(b), and more preferably has incisions formed using a blanking die having a waved form.

From the viewpoint of forming a portion to be bonded excellent in a tensile strength at break, concaves formed with a blanking die shown in Fig. 1(a) or incisions formed with a blanking die shown in Fig. 1(d) are preferred, and concaves formed with a blanking die shown in Fig. 1(a) are more preferred.

In Fig. 1, each blanking die has a size of 25 mm × 25 mm, and the bonding portion to be formed using the blanking die is presumed for use in high-frequency welding with a welding horn of 10 φ (circular horn having a diameter of 10 mm).

The area of each incision and concave is preferably not smaller than the area of the part (bottom) of a welding horn to be in contact with the polyurethane foam, and the area of each incision and concave is preferably 2 times or more the area of the bottom of the welding horn used, more preferably 3 times or more, even more preferably 5 times or more, and is preferably 30 times or less, more preferably 20 times or less, even more preferably 15 times or less. The part having concaves formed therein may impair a performance as an urethane foam, and therefore, forming too large concaves is undesirable.

### <Polyurethane foam>

In the present invention, the polyurethane foam is not specifically limited so far as having high-frequency weldability. An ordinary polyurethane foam is a thermosetting resin and therefore does not have high-frequency weldability. Accordingly, for imparting high-frequency weldability thereto, various types of polyurethane foams are used.

A polyurethane foam is generally produced from a polyol, a polyisocyanate and a foaming agent as indispensable components, and by adding a catalyst and a foaming aid thereto and reacting and foaming them, a polyurethane foam is produced.

JP 2011-241336 A describes a polyurethane foam using a specific polyhydroxy compound and an organic phosphorus compound and excellent in high-frequency weldability.

JP 2008-31310 A describes a polyurethane foam produced by reacting and foaming a raw material for a polyurethane foam that contains a specific kind and a specific amount of a polyol, a polyisocyanate, a foaming agent and a catalyst, and in addition thereto, an aqueous dispersion of a specific polyethylene resin.

Further, JP A 2008-111045 A describes a polyurethane foam for high-frequency welding produced by reacting and foaming a raw material that contains a specific kind and a specific amount of a polyol, a polyisocyanate, a catalyst, a foaming agent and an auxiliary catalyst, and in addition thereto, a specific amount of a powder of a thermoplastic resin having a melting point of 60 to 170°C.

In the present invention, as the polyurethane foam, any polyurethane foam having high-frequency weldability as above can be appropriately selected and used.

In the present invention, the polyurethane foam is preferably a sheet-like one, and the thickness of the polyurethane foam is preferably 5 to 50 mm, more preferably 5 to 30 mm, even more preferably 5 to 15 mm.

A case where a portion to be bonded has concaves but where a part not having concaves therein such as a portion not to be bonded is a sheet-like one can be said to be a sheet-like polyurethane foam.

### [Laminate and production method thereof]

In the present invention, a method for producing a laminate includes a step of laminating the polyurethane foam for high-frequency welding of the present invention and a thermoplastic resin (hereinafter this may be referred to as step 1), and a step of welding the portion to be bonded of the polyurethane foam for high-frequency welding and a thermoplastic resin at high frequencies (hereinafter this may be referred to as step 2).

The laminate of the present invention is one produced by thermally welding the polyurethane foam for high-frequency welding of the present invention and a thermoplastic resin, at the portion to be bonded of the polyurethane foam.

Using the polyurethane foam for high-frequency welding of the present invention as mentioned above, the polyurethane foam and a thermoplastic resin can be welded at high frequencies. Using the polyurethane foam for high-frequency welding of the present invention, excellent bonding performance can be secured even when the compression-bonding strength is lower than conventionally.

The thermoplastic resin as a substrate is not specifically limited, and can be appropriately selected from known thermoplastic resins such as a polyolefin resin, a polystyrene resin, a polyester resin and a polyamide resin. Specifically, examples thereof include polypropylene (PP), acrylonitrile-butadiene-styrene resin (ABS), polystyrene (PS), polyethylene (PE), and polyethylene terephthalate (PET).

Among these, polyethylene, polypropylene, and polyamide are preferred, and polyethylene and polypropylene are more preferred.

From the viewpoint of bettering bonding performance in high-frequency welding, the melting point of the thermoplastic resin is preferably such that the difference from the melting point of the adherend, thermoplastic resin is ±20°C, more preferably ±10°C, even more preferably ±5°C.

The polyurethane foam of the present invention is laminated with a thermoplastic resin, then a high-frequency voltage is applied thereto from the bonding part of the polyurethane foam whereby the polyurethane foam and the thermoplastic resin are fused through vibration and heat generation, and accordingly the polyurethane foam and the thermoplastic resin are considered to be welded through the fusion.

Regarding the condition of high-frequency welding, the frequency of the high-frequency voltage is preferably 10 to 40 kHz, more preferably 15 to 35 kHz. The amplitude is preferably 20 to 80 pm, more preferably 40 to 75 pm, even more preferably 60 to 70 µm.

The time for which high-frequency vibration is to be imparted is preferably 0.05 to 2.0 seconds, more preferably 0.1 to 1.0 second.

The pressure in high-frequency welding is preferably 0.1 to 1 MPa.

Here, high-frequency welding is a concept including ultrasonic welding.

The laminate of the present invention is excellent in sound absorption and is favorable as an interior and exterior materials for automobiles.

Examples of interior and exterior materials for automobiles include an instrument panel, a console box, an armrest, a headrest, a door trim, a rear panel, a pillar trim, a sun visor, a trunk room trim, a trunk lid trim, an air bag housing box, a seal buckle, a glove box, a steering wheel cover, a ceiling material and other interior and exterior materials for automobiles.

The use of the laminate of the present invention is not limited to the above, and except for the above-mentioned interior and exterior materials for automobiles, the laminate of the present invention is applicable to other uses required to have lightfastness and heat resistance, such as home electric appliances, OA equipment components, construction and housing components, and other industrial components.

In home electric appliances and OA equipment components, for example, the laminate of the present invention is suitable for various housing materials required to have lightfastness and heat resistance, such as those for televisions, videos, washing machines, driers, vacuum cleaners, coolers, air conditioners, remote controller cases, microwave ovens, toasters, coffee makers, pots, jars, dishwashers, personal computers, typewriters, cinema projectors, telephones, copying machines, facsimiles, and telexes.

In construction and housing components, for example, the laminate is suitable to materials for furniture, desks and chairs, wall decorating materials, ceiling decorating materials, and curtain wall materials, as well as for indoor floor materials for kitchens, lavatories, and washrooms, for outdoor floor materials for porches, terraces, balconies, and carports, and also for mats such as entrance mats, table clothes, coasters and ashtray mats.

In other industrial component fields, for example, the laminate is suitable to grips for power tools. In addition, the laminate is also suitable to materials for bags, cases, files, pocket notebooks, albums, stationery products, camera bodies, dolls and other toys, and further to outer surroundings of picture frames.

### Examples

Hereinafter, the present invention is described in more detail with reference to Examples and Comparative Examples, but the present invention is not restricted to the following Examples.

### [Methods for measurement and evaluation]

Methods for measurement and evaluation employed in Examples and Comparative Examples are as mentioned below.

### (1) Compression load

Using an Instron electrochemical universal tester, a portion to be bonded and a portion not to be bonded of a polyurethane foam having a thickness of 15 mm was compressed with a 10φ flat plate, and the load in compression to 2 mm was measured.

### (2) Tensile strength at break

A sample of 30 mm wide × 100 mm long of a polyurethane foam was prepared in which a portion to be bonded thereof was arranged in the center part of the sample, and this was pulled in a lengthwise direction using a tensile tester to measure the strength thereof at break (test speed: 200 mm/min). In addition, a portion not to be bonded of the sample was arranged in the center part thereof, and tested in the same manner to measure the tensile strength at break.

### (3) High-frequency weldability

After high-frequency welding, the polyurethane foam was peeled in the direction vertical to the bonding part, and the high-frequency weldability thereof was evaluated according to the following evaluation standards.
A: In the other part than the bonding part, polyurethane foam is broken and peeled.
B: Polyurethane foam remained in the bonding part (in the same area as the horn area).
C: Polyurethane foam remained in the bonding part (in 50% or more of the horn area).
D: Polyurethane foam remained in the bonding part (in less than 50% of the horn area), or did not remain.

### [Production of polyurethane foam]

The polyurethane foam production method is not specifically limited, for which any known method such as a one-shot method or a prepolymer method is employable. However, foaming is better in a one-shot method.

A polyol is metered in a plastic container having a suitable size, and a foaming agent, a foam stabilizer, a crosslinking agent, a catalyst and other additives are metered and added thereto. Finally, TDI is metered and added, and immediately mixed with a stirrer, and the resultant mixture is put into a box lined with a polyvinyl sheet or kraft paper.

Accordingly, the mixture foams to give a polyurethane foam.

The components used and the amount thereof are as shown in Table 1.

**Table 1**

| Component | part by mass |
|---|---|
| Polyol¹⁾ | 100 |
| TDI²⁾ | 101.5 |
| Water | 9 |
| Amine Catalyst³⁾ | 0.72 |
| Crosslinking Agent⁴⁾ | 0.74 |
| Organic Tin Catalyst⁵⁾ | 0.2 |
| Foam Stabilizer⁶⁾ | 4 |
| Auxiliary Foaming Agent⁷⁾ | 23.5 |
| Polyethylene⁸⁾ | 20 |
| Flame Retardant⁹⁾ | 24 |
| Color¹⁰⁾ | 4 |

| | |
|---|---|
| 1) to 10) in Table 1 are as follows. 1) Polyol: polyether polyol (PPG-based polyether polyol, "Sannix Triol GP-3000" (from Sanyo Chemical Industry Co., Ltd.), number-average molecular weight: 3,000) 2) TDI: tolylene diisocyanate (2,4-tolylene diisocyanate/2,6-tolylene diisocyanate = 80/20) 3) Amine catalyst: TEDA L33 (triethylenediamine/dipropylene glycol = 33/67% by mass solution, from Tosoh Corporation) 4) Crosslinking agent: DM82162, from Dow Chemical Corporation 5) Organic tin catalyst: Nikka Octix Tin (tin octylate, from Nippon Kagaku Sangyo Co., Ltd.) 6) Foam stabilizer: Degostab B 8239 F, from Evonik Degussa Japan Corporation 7) Auxiliary foaming agent: Solstice™ 1233zd (trans-1-chloro-3,3,3-trifluoropropene, from Honeywell Corporation) 8) Polyethylene: Sunfine LH411, from Asahi Kasei Chemicals Co., Ltd. 9) Flame retardant: Daiguard 0880, from Daihachi Chemical Industrial Co., Ltd. 10) Color: POLYTON BLACK UE2030-T, from DIC Corporation | |

### [Example 1]

Using a blanking die (25 mm × 25 mm) shown in Fig. 1(a), concaves were formed in a portion to be bonded of a produced polyurethane foam.

The compression load of the portion not to be bonded and the compression load of the portion to be bonded of the resultant polyurethane foam were measured. In addition, the tensile strength at break of the portion not to be bonded and that of the portion to be bonded were measured.

Next, a polypropylene resin was used as a thermoplastic resin substrate, and on the thermoplastic substrate, the resultant polyurethane foam was laminated, and further a welding horn (φ10 mm columnar horn) was pressed against the portion to be bonded under the condition of a power of 200 W, a frequency of 28 KHz and a welding time of 1 second to thereby weld the polyurethane foam and the thermoplastic resin substrate to produce a laminate.

The resultant laminate was evaluated for high-frequency weldability.

The results are shown in Table 1 below.

### [Examples 2 to 4]

Polyurethane foams each having a portion to be bonded were produced in the same manner as in Example 1 and evaluated also in the same manner as in Example 1, except that a blanking die (25 mm × 25 mm) shown in Fig. 1(b) to Fig. 1(d) was used to form incisions in the portion to be bonded of the produced polyurethane foam.

The results are shown in Table 1 below.

### [Comparative Example 1]

The polyurethane foam was evaluated in the same manner as in Example 1 except that the foam was not processed to form a portion to be bonded.

The results are shown in Table 2 below.

**Table 2**

| | Example 1 | Example 2 | Example 3 | Example 4 | Comparative Example 1 |
|---|---|---|---|---|---|
| Form of Blanking Die | Fig. 1(a) (ruling line blade) | Fig. 1(b) (Combination of letters "C") | Fig. 1(c) (waveform) | Fig. 1(d) (letter (C)) | blank (unwrought) |
| Compression Load of portion to be bonded (N) | 1.87 | 4.18 | 3.76 | 4.42 | 6.88 |
| Ratio of Compression Load (%) (portion to be bonded/portion not to be bonded) | 27 | 61 | 55 | 64 | 100 |
| Tensile Strength at break of Portion to be bonded (kPa) | 58 | 37 | 21 | 43 | 59 |
| Ratio of Tensile Strength at break (%) (portion to be bonded/portion not to be bonded) | 98.3 | 62.7 | 35.6 | 72.9 | 100.0 |
| High - Frequency Weldability | A | B | B | C | D |

As shown in Table 2, the polyurethane foams for high-frequency welding of Examples 1 to 4, in which the compression load of the portion to be bonded is smaller than the compression load of the portion not to be bonded (compression load in Comparative Example 1), all had improved high-frequency weldability as compared with the unwrought case.

Especially the polyurethane foam of Example 1 where concaves were formed using a ruling line blade was excellent in high-frequency weldability.

### Industrial Applicability

The polyurethane foam for high-frequency welding of the present invention is excellent in high-frequency weldability, and even when a high-frequency welder having a low compression-bonding strength is used in welding the polyurethane foam with a thermoplastic resin substrate at high frequencies, the bonding strength of the resultant laminate improves. Further, the laminate formed by thermally welding the polyurethane foam for high-frequency welding of the present invention and a thermoplastic resin is favorably used as interior and exterior materials for automobiles.

## Claims

1. A polyurethane foam for high-frequency welding, wherein at least a part of a portion to be bonded has a smaller compression load than the compression load of a portion not to be bonded therein.

2. The polyurethane foam for high-frequency welding according to claim 1, wherein the portion to be bonded has at least one selected from incisions and concaves.

3. The polyurethane foam for high-frequency welding according to claim 1 or 2, wherein the ratio of the compression load of the portion to be bonded to the compression load of the portion not to be bonded is 80% or less.

4. The polyurethane foam for high-frequency welding according to claim 1 or 2, wherein the ratio of the compression load of the portion to be bonded to the compression load of the portion not to be bonded is 65% or less.

5. The polyurethane foam for high-frequency welding according to any of claims 1 to 4, wherein the ratio of the tensile strength at break of the portion to be bonded to the tensile strength at break of the portion not to be bonded is 60% or more.

6. The polyurethane foam for high-frequency welding according to any of claims 1 to 5, wherein the portion to be bonded has concaves.

7. A laminate produced by thermally welding a polyurethane foam for high-frequency welding of any of claims 1 to 6 and a thermoplastic resin.

8. The laminate according to claim 7, which is an interior and exterior material for automobiles.
